# EUROPEAN PATENT SPECIFICATION

(11) **EP 4 561 057 B1**
(45) Date of publication and mention of the grant of the patent: **09.12.2026**
(21) Application number: 25169538.3
(22) Date of filing: 25.02.2021
(51) Int. Cl.: H04N 17/00

(54) **SYSTEMS AND METHODS FOR CALIBRATING IMAGE CAPTURING MODULES**
SYSTEME UND VERFAHREN ZUR KALIBRIERUNG VON BILDERFASSUNGSMODULEN
SYSTÈMES ET PROCÉDÉS D'ÉTALONNAGE DE MODULES DE CAPTURE D'IMAGE

(30) Priority: 12.03.2020 US 202016816525
(43) Date of publication of application: 28.05.2025
(62) Document number(s) of the earlier application(s) in accordance with Art. 76 EPC: 21712381.9 / 4 118 819
(73) Proprietor: BNSF Railway Company, Fort Worth, TX 76131 (US)
(72) Inventor: KRUEGER, Darrell, R., Lawrence, KS, 66049 (US); SMITLEY, Garrett, Fort Worth, TX, 76111 (US)
(74) Representative: Lucke, Andreas

(56) References cited:
- CN-A- 106 023 213
- CN-A- 108 765 494
- CN-A- 110 161 043
- US-B1- 6 950 212

## Description

### TECHNICAL FIELD

This disclosure generally relates to image capturing modules, and more specifically to systems and methods for calibrating image capturing modules.

### BACKGROUND

Certain vehicles use cameras to capture images of objects in the environment surrounding the vehicle. These images may be used to identify and/or locate objects within the surrounding environment. However, images captured from a vehicle while the vehicle is in motion may be blurry or distorted, which can result in an inaccurate identification and/or location of the objects.
CN 108765494 A discloses a multi-camera calibration method based on a cylindrical calibration object relying on chessboard grids and coded patterns, cylinder calibration and a multi-camera calibration.
US 6,950,212 B1 discloses a method for making and evaluating a sample cut in an engraving machine, an engraving control signal for guiding a stylus is formed from engraving data. The stylus cuts a series of cups. During a trial engraving trial cups are engraved and a video image is made. In accordance with screen parameters, measuring points are fixed in the video image as distances to a selected reference point. Geometric parameters of the trail cups are measured in the video image and are compared to corresponding geometric parameters of the cups representing predetermined tone values. Adjustment values are deduced from this comparison which are used to calibrate the engraving control signal.
CN 106023213 A discloses a multi-camera system calibration method based on a cylindrical surface. A plurality of characteristic points are constructed on the cylindrical surface, and cameras surrounding the cylindrical surface are enabled to shoot at least six characteristic points; three-dimensional coordinate systems are established with the axis and radiuses of the cylindrical surface serving as coordinate axes, and the coordinate systems based on different radius directions are marked; according to the construction method of the characteristic points and the size of the cylindrical surface, the three-dimensional coordinates of the characteristic points and the conversion relation among the coordinate systems based on different radius directions are calculated; each camera shoots the images of the cylindrical surface, the image coordinates of the characteristic points are extracted, calibration initial values of each camera are obtained by means of direct linear conversion, and all internal and external parameters of each camera are obtained by means of non-linear optimization; and according to the relative relation between each camera and the cylindrical surface, the relative relations among the cameras are calculated, and the calibration of the multi-camera system is completed.
CN 110161043 A discloses a detection vehicle for a subway tunnel structure. The detection vehicle comprises a positioning system, an acquisition system and a rail flat car, wherein the rail flat car runs on a rail of a subway tunnel, the positioning system and the acquisition system are both installed on the rail flat car, and the positioning system comprises a laser ranging module and an inertial navigation module. The detection vehicle further comprises an independent power supply system and a central control system which are installed on the rail flat car, wherein the independent power supply system is used for supplying power to the acquisition system, the positioning system and the central control system; and the central control system comprises an acquisition industrial personal computer and a positioning industrial personal computer which are respectively connected with the acquisition system and the positioning system.

### SUMMARY

Aspects of the invention are set out in the independent claims and preferred features are set out in the dependent claims. Features of one aspect may be applied to any aspect alone or in combination with other aspects.

Technical advantages of certain embodiments of this disclosure may include one or more of the following. This disclosure describes systems and methods for bench calibrating an image capturing module, which may reduce the time and/or personnel required to field calibrate the image capturing module. Certain embodiments of this disclosure use a rotating drum located in a laboratory to simulate a moving roadway, which allows an operator (e.g., a computer programmer) to test the calibration system at full speed with a live image. As such, the systems and methods described herein for bench calibrating an image capturing module may improve the safety and efficiency of field calibration since the time the personnel spends calibrating the image capturing module in the field under dangerous conditions (e.g., working on a roadway and under heavy equipment) is reduced, the number of field personnel is reduced, and the cost of expensive field testing is minimized. The systems and methods described in this disclosure may be generalized to different transportation infrastructures, including railways, roads, and waterways.

Other technical advantages will be readily apparent to one skilled in the art from the following figures, descriptions, and claims. Moreover, while specific advantages have been enumerated above, various embodiments may include all, some, or none of the enumerated advantages.

### BRIEF DESCRIPTION OF THE DRAWINGS

To assist in understanding the present disclosure, reference is now made to the following description taken in conjunction with the accompanying drawings, in which:
FIG. 1 illustrates an example system for field calibrating an image capturing module and a vehicle encoder;
FIG. 2 illustrates an example image capturing module that may be used by the system of FIG. 1;
FIG. 3 illustrates an example system for bench calibrating an image capturing module;
FIG. 4 illustrates an example method for field calibrating an image capturing module;
FIG. 5 illustrates an example method for bench calibrating an image capturing module; and
FIG. 6 illustrates an example computer system that may be used by the systems and methods described herein.

### DETAILED DESCRIPTION

Certain vehicles include image capturing systems that capture images while the vehicle is in motion. These images may be used by machine vision models to detect and/or locate objects in the environment surrounding the vehicle. Embodiments of this disclosure describe systems and methods for calibrating the image capturing modules and/or rotary encoders used by these systems. These calibration procedures may ensure that the image capturing modules and rotary encoders used in these systems are in synchronization and deliver sharp, high contrast, and properly proportioned images.

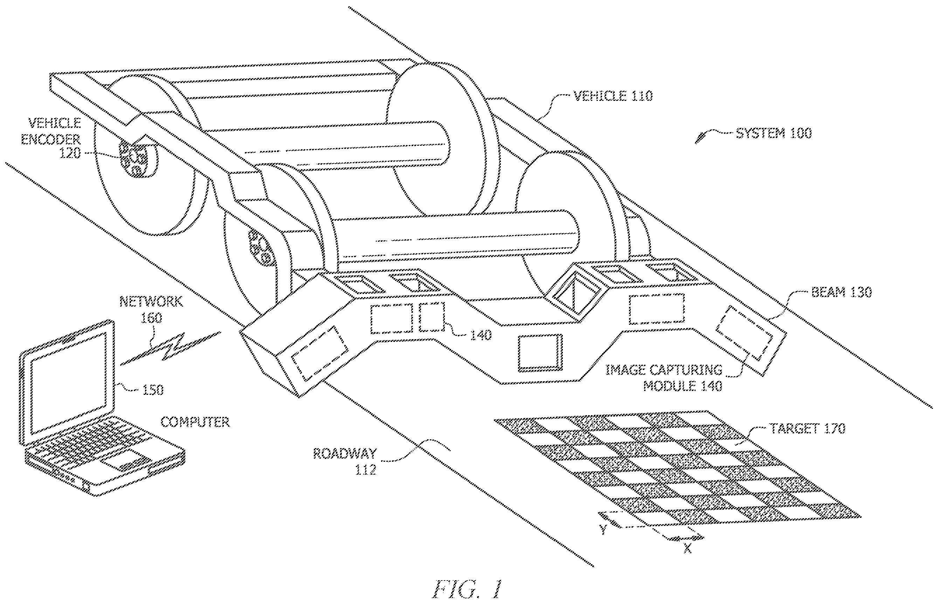

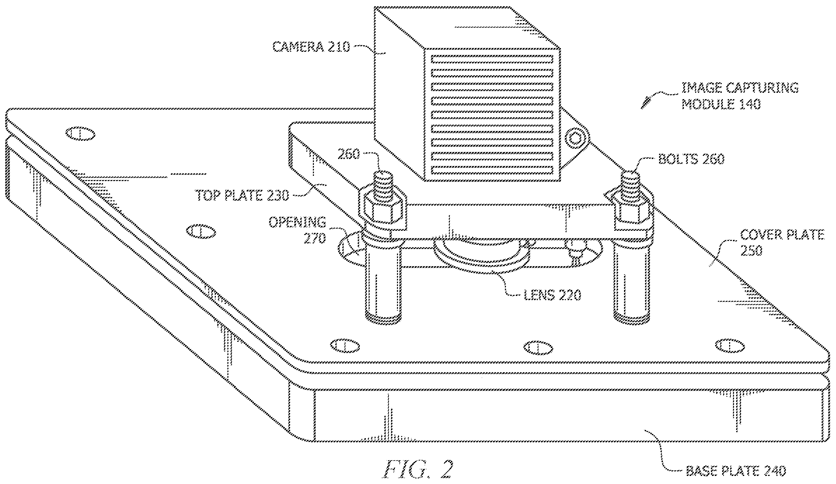

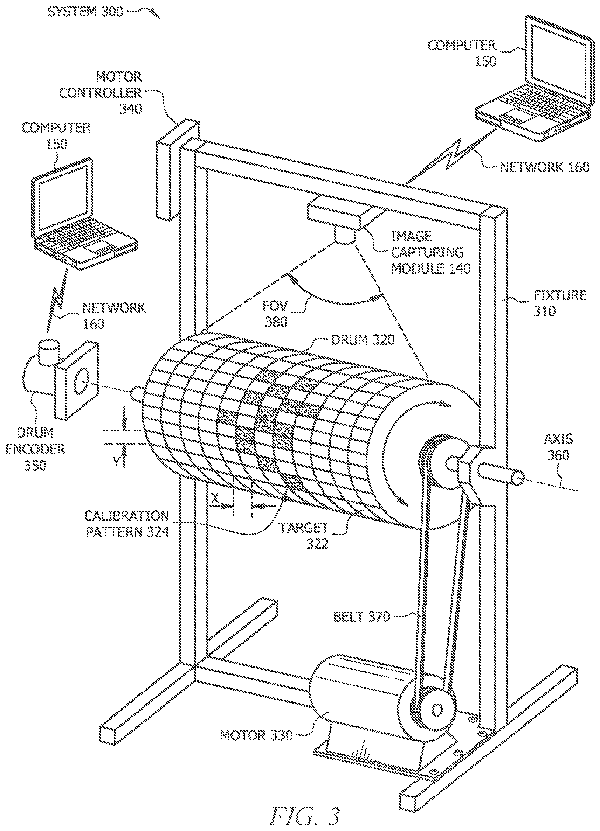

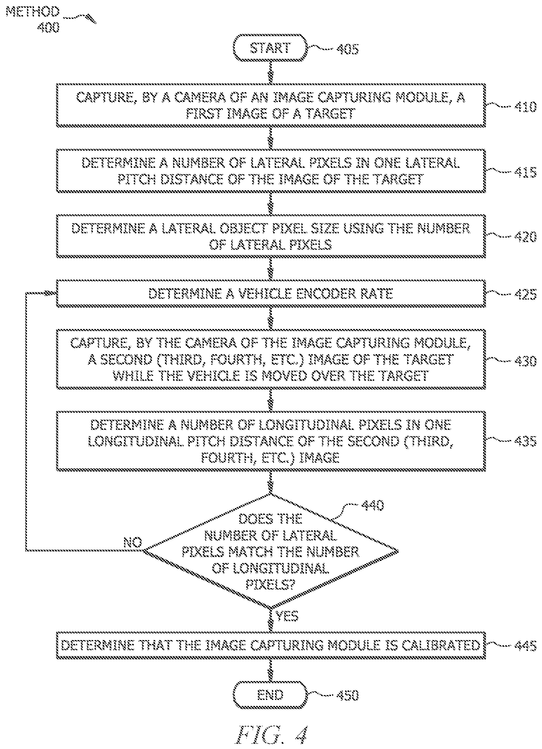

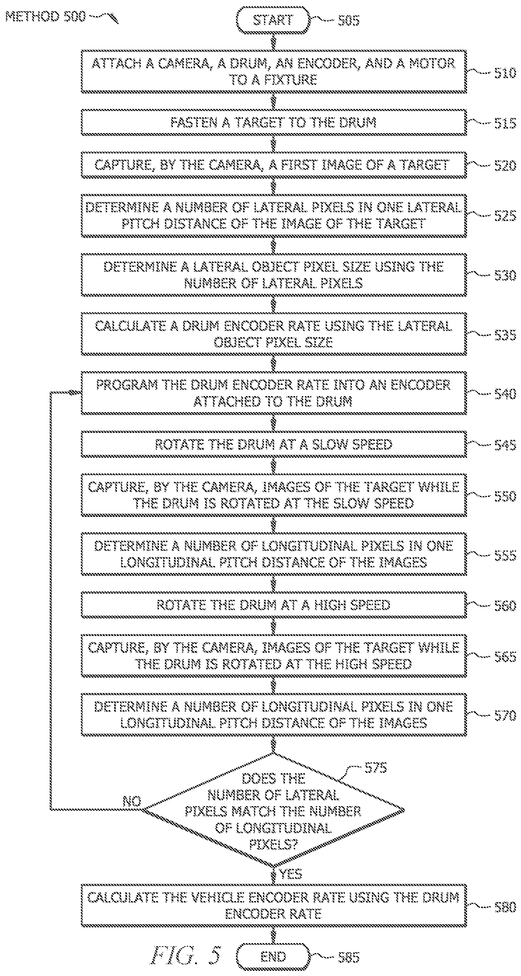

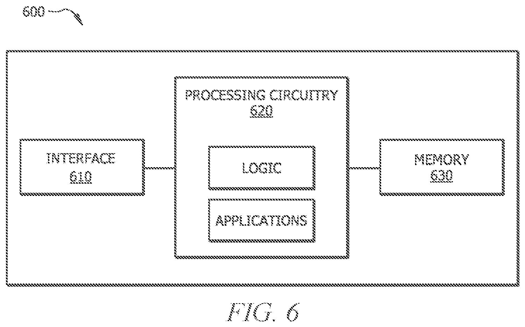

FIGS. 1 through 6 show example systems and methods for calibrating an image capturing module. FIG. 1 shows an example system for field calibrating an image capturing module, and FIG. 2 shows an example image capturing module that may be used by the system of FIG. 1. FIG. 3 shows an example system for bench calibrating an image capturing module. FIG. 4 shows an example method for field calibrating an image capturing module, and FIG. 5 shows an example method for bench calibrating an image capturing module and a drum encoder. FIG. 6 shows an example computer system that may be used by the systems and methods described herein.

FIG. 1 illustrates an example system 100 for field calibrating an image capturing module 140. System 100 or portions thereof may be associated with an entity, which may include any entity, such as a business, company (e.g., a railway company, a transportation company, etc.), or a government agency (e.g., a department of transportation, a department of public safety, etc.) that field calibrates image capturing module 140. The elements of system 100 may be implemented using any suitable combination of hardware, firmware, and software. For example, the elements of system 100 may be implemented using one or more components of the computer system of FIG. 6.

System 100 includes a vehicle 110, a vehicle encoder 120, a beam 130, one or more image capturing modules 140, a computer 150, a network 160, and a target 170. Vehicle 110 of system 100 is any machine capable of automated movement. Vehicle 110 may be a car, a locomotive, a truck, a bus, an aircraft, or any other machine suitable for mobility. Vehicle 110 may operate at any speed that allows one or more components (e.g., sensors, cameras, etc.) of beam 130 to capture images. For example, vehicle 110 may be a rail bound vehicle that travels at 65 miles per hour (mph). Roadway 112 of system 100 is any path that accommodates vehicle 110. For example, vehicle 110 may travel along roadway 112. Roadway 112 may include a road, a highway, a railroad track, a water way, and the like.

Vehicle encoder 120 of system 100 is a rotary encoder or other timing device used to measure axle rotation. Vehicle encoder 120 may measure the number of times an axle makes a revolution. Vehicle encoder 120 may be attached to an axle of vehicle 110. Vehicle encoder 120 may be physically and/or logically connected to one or more components of system 100. For example, vehicle encoder 120 may be physically and/or logically connected to one or more cameras and/or sensors of image capturing module 140. As another example, vehicle encoder 120 may be physically and/or logically connected to computer 150.

Vehicle encoder 120 is configured to communicate with a camera of image capturing module 140 via a controller to ensure that the camera captures images of the same perspective and proportion regardless of the speed of travel of vehicle 110. For example, vehicle encoder 120 may be synchronized with multiple cameras of image capturing modules 140 to ensure that all cameras are taking images at the same time. As another example, vehicle encoder 120 may be synchronized with a camera of image capturing module 140 to ensure that a camera traveling with vehicle 110 at a first speed (e.g., 10 miles per hour) captures images that are the same perspective and proportion of a camera traveling with vehicle 110 at a second speed (e.g., 65 miles per hour).

Beam 130 of system 100 is a structure that contains and orients components (e.g., image capturing modules 140) used to capture images. In certain embodiments, beam 130 operates similar to a flatbed document scanner with the exception that beam 130 is in motion while capturing images of stationary physical objects. Beam 130 engages with vehicle 110. For example, beam 130 may be bolted to a sub-frame attached to vehicle 110. In the illustrated embodiment of FIG. 1, beam 130 has three sections that include two end sections and a center section. Beam 130 has a gullwing configuration such that the center section bends inward toward the center of beam 130. The gullwing configuration allows the image capturing components (e.g., sensors, cameras, etc.) of image capturing modules 140 within beam 130 to be properly oriented within with respect to the physical objects being captured. In certain embodiments, the center section of beam 130 is omitted, and each end section is connected to vehicle 110. Beam 130 may be made of metal (e.g., steel or aluminum), plastic, or any other material suitable for housing components of beam 130 and for attaching beam 130 to vehicle 110.

Beam 130 may include one or more openings. Openings may provide for the placement of image capturing modules 140 within beam 130. Openings may allow for installation, adjustment, and maintenance of image capturing modules 140. While beam 130 is illustrated in FIG. 1 as having a particular size and shape, beam 130 may have any size and shape suitable to house and orient image capturing modules 140. Other factors that may contribute to the design of beam 130 include shock resistance, vibration resistance, weatherproofing considerations, durability, ease of maintenance, calibration considerations, and ease of installation.

Image capturing modules 140 of system 100 are used to capture images while vehicle 110 is in motion. Each image capturing module 140 may include one or more sensors, one or more cameras, and the like. One or more image capturing modules 140 may be attached to vehicle 110 at any location that allows image capturing modules 140 to capture images of the environment surrounding vehicle 110. In the illustrated embodiment of FIG. 1, image capturing modules 140 are located within beam 130.

In certain embodiments, each end section of beam 130 houses one or more image capturing modules 140. For example, a first end section of beam 130 may house image capturing module 140 that includes two downward facing cameras that capture images of tie and ballast areas of a rail. The first end section of beam 130 may house the two downward facing cameras in a portion of the first end section that is substantially horizontal to the rail. The second end section of beam 130 opposite the first end section may house two image capturing modules 140 that each include two angled cameras that capture images of both sides of the rail and rail fastening system. The second end section of beam 130 may house the four angled cameras in portions of the second end section that are at an angle (e.g., a 45 degree angle) to the rail.

Image capturing modules 140 may include various types of sensors depending on sensing and/or measuring requirements. Sensors housed by image capturing modules 140 may include optical sensors (e.g., cameras for visible light (mono and color), infrared, UltraViolet, and/or thermal), motion sensors (e.g., gyroscopes and accelerometers), light detection and ranging (LIDAR) sensors, hyperspectral sensors, Global Positioning System (GPS) sensors, and the like. Optical sensors and lasers may be used together for laser triangulation to measure deflection or profile. LIDAR sensors may be used for generating three-dimensional (3D) point-cloud data. Hyperspectral sensors may be used for specific wavelength responses. An example image capturing module 140 is described in FIG. 2 below.

Computer 150 of system 100 represents any suitable computing component that may be used to process information for system 100. Computer 150 may coordinate one or more components of system 100. Computer 150 may receive data from image capturing modules 140 and/or vehicle encoder 120. Computer 150 may monitor inputs and/or outputs of image capturing modules 140 and/or vehicle encoder 120. Computer 150 may include a communications function that allows users (e.g., a technician) to engage system 100 directly. For example, a user may access computer 150 through an interface (e.g., a screen, a graphical user interface (GUI), or a panel) of computer 150. Computer 150 may be a laptop computer, a desktop computer, a smartphone, a tablet, a personal digital assistant, a wearable computer, and the like. Computer 150 may be located inside or external to vehicle 110. Computer 150 may communicate with one or more components of system 100 via network 160.

Network 160 of system 100 is any type of network that facilitates communication between components of system 100. One or more portions of network 160 may include an ad-hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, a 3G network, a 4G network, a 5G network, a Long Term Evolution (LTE) cellular network, a combination of two or more of these, or other suitable types of networks. One or more portions of network 160 may include one or more access (e.g., mobile access), core, and/or edge networks. Network 160 may be any communications network, such as a private network, a public network, a connection through Internet, a mobile network, a WI-FI network, a Bluetooth network, etc. One or more components of system 100 may communicate over network 160. For example, computer 150 may communicate over network 160, including receiving information from image capturing modules 140 and/or vehicle encoder 120.

Target 170 of system 100 is an object used to calibrate image capturing module 140 and/or vehicle encoder 120. In certain embodiments, target 170 is placed in clear view of image capturing module 140. For example, target 170 may be secured to roadway 112 (e.g., railroad tracks) in clear view of the camera of image capturing module 140. Target 170 includes a calibration pattern. The calibration pattern may be any suitable size, shape, and/or design. The calibration pattern design may include a checkerboard pattern, a chessboard pattern, a circle grid pattern, a ChArUcoboard pattern, and the like. For example, the calibration pattern may be a printed black-and-white checkerboard pattern that includes multiple black and white squares. The calibration pattern may have a pitch between 0.375 inch and 2.0 inches (e.g., 0.5 inch, 1.0 inch, etc.). The pitch represents the length/width of one square of the checkerboard pattern. In certain embodiments, the calibration pattern may include units with an unequal length to width ratio. For example, the length of each unit may be twice as long as the width of each unit.

In operation, a vehicle encoder rate is programmed into vehicle encoder 120. The vehicle encoder rate is a number of electrical pulses generated by vehicle encoder 120 in one revolution of a shaft of vehicle encoder 120. The vehicle encoder rate may be determined from calibration data previously generated during bench calibration procedures, as described in FIGS. 3 and 5 below. If bench calibration data is not available, an arbitrary initial value for the vehicle encoder rate may be programmed into vehicle encoder 120. In certain embodiments, the vehicle encoder rate that is programmed into vehicle encoder 120 is an integer. In certain embodiments, an operator programs the vehicle encoder rate into vehicle encoder 120.

Vehicle encoder 120 and image capturing module 140 of system 100 are secured to vehicle 110. Target 170 of system 100 is secured to roadway 112 in view of the camera of image capturing module 140 to be calibrated. Target 170 is located perpendicularly to the axis of the camera of image capturing module 140. The camera of image capturing module 140 is activated, and an operator observes the current focus of the camera under constant lighting conditions. If the contrast between two pixels identifying the boundary of light and dark portions of target 170 is less than a maximum obtainable contrast (or less than observed during bench calibration procedures), the operator unlocks the focus mechanism of the camera and adjusts the focus until a maximum contrast is achieved. The focus mechanism is then locked.

Image capturing module 140 is connected to computer 150 via network 160. Computer 150 includes image capturing software. Image capturing module 140 captures a first image of target 170, which is displayed on computer 150. The operator determines a number of lateral (e.g., cross-web) pixels in a lateral pitch distance of the first image of target 170 and determines a lateral object pixel size (OPS) by dividing the pitch of target 170 by the number of lateral pixels in the pitch region. A trial vehicle encoder rate is then determined by dividing the wheel circumference of vehicle 110 by the lateral OPS. If the trial vehicle encoder rate is different than the initial vehicle encoder rate programmed into vehicle encoder 120, the trial vehicle encoder rate is programmed into the vehicle encoder 120. The image capturing software of computer 150 is triggered off of vehicle encoder 120 and vehicle 110 is moved forward or backward over target 170.

Image capturing device 140 captures second images of target 170 while vehicle 110 is moved over target 170. An operator of computer 150 determines (e.g., counts) a number of light or dark longitudinal (e.g., down-web) pixels in one longitudinal pitch distance of each of the second images and compares the number of lateral pixels to the number of longitudinal pixels. If the number of lateral pixels matches the number of longitudinal pixels, image capturing module 140 and vehicle encoder 120 are calibrated. If the number of lateral pixels is different from the number of longitudinal pixels, the vehicle encoder rate is adjusted until number of lateral pixels matches the number of longitudinal pixels. As such, system 100 may be used to calibrate image capturing module 140 and vehicle encoder 120 to ensure sufficient images are captured by system 100 that may be used to accurately identify objects in the environment surrounding vehicle 110.

Although FIG. 1 illustrates a particular arrangement of vehicle 110, vehicle encoder 120, beam 130, image capturing modules 140, computer 150, network 160, and target 170, this disclosure contemplates any suitable arrangement of vehicle 110, vehicle encoder 120, beam 130, image capturing modules 140, computer 150, network 160, and target 170. For example, computer 150 may be located inside vehicle 110. Vehicle 110, vehicle encoder 120, beam 130, image capturing modules 140, and computer 150 may be physically or logically co-located with each other in whole or in part.

Although FIG. 1 illustrates a particular number of vehicles 110, vehicle encoders 120, beams 130, image capturing modules 140, computers 150, networks 160, and targets 170, this disclosure contemplates any suitable number of vehicles 110, vehicle encoders 120, beams 130, image capturing modules 140, computers 150, networks 160, and targets 170. For example, system 100 may include first beam 130 at a front end of vehicle 110 and second beam 130 at a rear end of vehicle 110. As another example, system 100 may include multiple computers 150. One or more components of system 100 may be implemented using one or more components of the computer system of FIG. 6.

FIG. 2 illustrates an example image capturing module 140 that may be used by system 100 of FIG. 1. Image capturing module 140 includes a camera 210, a lens 220, a top plate 230, a base plate 240, a cover plate 250, bolts 260, and an opening 270. Camera 210 is any device that captures images. For example, camera 210 may capture images of target 170 of FIG. 1. As another example, camera 210 may capture images of a rail component (e.g., a rail joint, a switch, a frog, a fastener, ballast, a rail head, and/or a rail tie). In certain embodiments, camera 210 includes one or more sensors.

One or more cameras 210 may capture images from different angles. For example, one or more cameras 210 may capture images of both rails of a railway system at any given location. Each beam (e.g., beam 130 of FIG. 1) may include multiple cameras 210. The beam may include first camera 210 aimed straight down to capture an overhead image of a target (e.g., target 170 of FIG. 1), a physical object, etc. The beam may include second camera 210 aimed downward and outward to capture an angled image of the target, a physical object, etc.

Camera 210 may be a line scan camera. A line scan camera includes a single row of pixels. Camera 210 may be a dual line scan camera. A dual line scan camera includes two rows of pixels that may be captured and/or processed simultaneously. As camera 210 moves over a physical object, camera 210 may capture images such that a complete image of the physical object can be reconstructed in software line by line. Camera 210 may have a capture rate up to 140 kilohertz. Camera 210 may have a resolution and optics to detect physical objects of at least 1/16 inches in size. In certain embodiments, camera 210 includes lens 220 that focuses and directs incident light to a sensor of camera 210. Lens 220 may be a piece of glass or other transparent substance. Lens 220 may be made of any suitable material (e.g., steel, aluminum, glass, plastic, or a combination thereof.)

Top plate 230 and base plate 240 are structural elements used to position, support, and/or stabilize one or more components of image capturing module 140 (e.g., camera 210 or a sensor). Top plate 230 and bottom plate 540 may be made of any suitable material (e.g., steel, aluminum, plastic, glass, and the like). Top plate 230 may be connected to base plate 240 with one or more bolts 260. Bolts 260 (e.g., jack bolts) may be used to alter a pitch and/or roll orientation of camera 210. For example, bolts 260 may be used to change an effective height between top plate 230 and base plate 240. Top plate 230 and/or base plate 240 may be adjusted to reduce vibration and/or shock of image capturing module 140. Top plate 230 and/or base plate 240 may include resistive heating elements to provide a warm environment for camera 210 and lens 220 to operate during cooler weather.

Cover plate 250 is a plate that covers base plate 240. Cover plate 250 may be made of any suitable material (e.g., glass, steel, aluminum, and the like). Cover plate 250 includes an opening 270. Opening 270 may serve as an aperture through which a lens of camera 210 views the physical object. Opening 270 allows for transmission of a sensed signal from the surrounding environment to reach a sensor of camera 210. Opening 270 may be any suitable size (e.g., oval, rectangular, and the like) to accommodate views of camera 210. Lens 220 of camera 210 may be positioned directly over opening 270.

Although FIG. 2 illustrates a particular arrangement of camera 210, lens 220, top plate 230, base plate 240, cover plate 250, bolts 260, and opening 270, this disclosure contemplates any suitable arrangement of camera 210, lens 220, top plate 230, base plate 240, cover plate 250, bolts 260, and opening 270. Although FIG. 2 illustrates a particular number of cameras 210, lenses 220, top plates 230, base plates 240, cover plates 250, bolts 260, and openings 270, this disclosure contemplates any suitable number of cameras 210, lenses 220, top plates 230, base plates 240, cover plates 250, bolts 260, and openings 270. For example, image capturing module 140 may include multiple cameras 210. As another example, in certain embodiments, image capturing module 140 may not include certain components (e.g., base plate 240) illustrated in FIG. 2. One or more components of image capturing module 140 may be implemented using one or more elements of the computer system of FIG. 6.

FIG. 3 illustrates an example system 300 for bench calibrating image capturing module 140. Bench calibration includes calibration procedures where image capturing module 140 is calibrated at a bench using calibration devices to simulate the process rather than calibrating image capturing module 140 in the field using the actual process itself. System 300 simulates a roadway (e.g., roadway 112 of FIG. 1) moving under image capturing module 140. System 300 or portions thereof may be associated with an entity, which may include any entity, such as a business, company (e.g., a railway company, a transportation company, etc.), or a government agency (e.g., a department of transportation, a department of public safety, etc.) that bench calibrates image capturing module 140. The elements of system 300 may be implemented using any suitable combination of hardware, firmware, and software. For example, the elements of system 300 may be implemented using one or more components of the computer system of FIG. 6.

System 300 of FIG. 3 includes image capturing module 140, computer 150, network 160, a fixture 310, a drum 320, a motor 330, a motor controller 340, and a drum encoder 350. Fixture 310 of system 300 is any structure that is used to support one or more components of system 300. Fixture 310 may include one or more frames, panels, braces, fasteners (e.g., screws, bolts, etc.), and the like. One or more components of system 300 may be installed on fixture 300. In the illustrated embodiment of FIG. 3, image capturing module 140, drum 320, motor 330, motor controller 340, and drum encoder 350 are installed on fixture 310.

Image capturing module 140 is installed on fixture 310 with a fixed working distance between image capturing module 140 and target 322. This working distance is a nominal working distance and may vary slightly between different vehicles (e.g., vehicle 110 of FIG. 1) that utilize image capturing module 140. In certain embodiments, the fixed working distance between image capturing module 140 and target 322 of FIG. 3 is substantially (e.g., within five percent) equal to the fixed working distance between image capturing module 140 installed on vehicle 110 of FIG. 1 and target 170 secured to roadway 112 of FIG. 1. Image capturing module 140 may be physically and/or logically connected to one or more components of system 300. For example, image capturing module 140 may be physically and/or logically connected to drum encoder 350. As another example, image capturing module 140 may be physically (e.g., via a wired connection) and/or logically (e.g., via network 160) connected to computer 150.

Drum 320 of system 300 is an object that rotates about axis 360. Drum 320 is used to simulate a roadway (e.g., roadway 112 of FIG. 1) moving under image capturing module 140. Drum 320 may be any suitable shape or size that allows rotation about axis 360. In the illustrated embodiment of FIG. 3, drum 320 is cylindrical in shape. In certain embodiments, axis 360 passes through the center of drum 320. Drum 320 may rotate about a shaft that is located along axis 360. For example, a cylindrical shaft may be placed along the length (or a portion thereof) of the core of drum 320, and drum 320 may rotate among the shaft. Drum 320 may be any suitable material (e.g., plastic, metal, wood, fabric, a combination thereof, etc.). For example, drum 320 may be a hollow plastic cylinder with a metal cap on each end. The shaft of drum 320 may pass through the center of each metal cap.

Target 322 of system 100 is an object used to calibrate camera 210 and/or drum encoder 320. Target 322 of system 300 is attached to drum 320. Target 322 is located coaxially and in synchronization with drum encoder 350. Target 322 may be any suitable material (e.g., paper, fabric, plastic, ink, a combination thereof, etc.). In certain embodiments, target 322 may be fastened to drum 320 using one or more fasteners (e.g., an adhesive, screws, pins, nails, etc.). For example, target 322 may be glued to an outside surface or an inside surface of drum 320. In certain embodiments, drum 322 is a hollow, clear tube, and target 322 is placed on the inside surface of the hollow, clear tube such that target 322 is visible from the exterior of drum 322. In some embodiments, target 322 is part of drum 320. For example, target 322 may be printed directly on drum 320.

Target 322 includes a calibration pattern 324. Calibration pattern 324 may be any suitable size, shape, and/or design. Calibration pattern 324 design may include a checkerboard pattern, a chessboard pattern, a circle grid pattern, a ChArUcoboard pattern, and the like. For example, calibration pattern 324 may be a printed black-and-white checkerboard pattern with a pitch between 0.375 inch and 2.0 inches (e.g., 0.5 inch, 1 inch, etc.). The pitch represents the length/width of one square of the checkerboard pattern. In certain embodiments, calibration pattern 324 may include units with an unequal length to width ratio. For example, the length of each unit may be twice as long as the width of each unit. Calibration pattern 324 of target 322 is identical to the calibration pattern of target 170 of FIG. 1. In certain embodiments, target 322 and target 170 of FIG. 1 are the same target.

Motor 330 of system 300 is any machine that initiates the rotation of drum 320. Motor 330 may be an alternating current (AC) motor, a direct current (DC) motor, a single phase motor (e.g., 115/230 volt), a three phase motor (e.g., 230/460 volt), etc. Motor may have a revolutions-per-minute (RPM) range of 1000 to 8000 (e.g., 1700-1800). Motor 330 may be physically or logically connected to drum 320. For example, a belt 370 may be used to connect motor 330 to a rod passing through axis 360 of drum 320. Belt 370 is used to transmit drive from motor 330 to drum 320. Motor 330 may be attached to fixture 310 at any suitable location. In the illustrated embodiment of FIG. 3, motor 330 is attached to a base of fixture 310.

Motor controller 340 of system 300 controls the operation of motor 330. For example, motor controller 340 may be used to initiate the rotation of motor 330, adjust the speed of motor 330, and the like. In certain embodiments, motor controller 340 is manually operated by one or more users. Motor controller 340 may include one or more buttons, switches, displays, touch sensors, GUI), and the like that allow one or more users (e.g., operators, technicians, etc.) to input information. For example, motor controller 340 may include an on/off switch that allows a user to turn the motor on and/or off, an up/down button that allows the user to increase/decrease the speed of the motor, and the like. In some embodiments, motor controller 340 may be connected to computer 150 via network 160, which allows motor controller 340 to be operated remotely. Motor 330 and motor controller 340 drive drum 320 at a user selectable rate (e.g., 10 to 70 miles per hour). In certain embodiments, drum 320 is driven in proportion to the maximum speed (e.g., 65 or 70 mph) of vehicle 110 of FIG. 1.

Drum encoder 350 of system 300 is a rotary encoder or other timing device used to measure axle rotation. Drum encoder 350 is identical (e.g., same make and model) to vehicle encoder 120 used in system 100 of FIG. 1. Drum encoder 350 may measure the number of times an axle makes a revolution. Drum encoder 350 may be physically and/or logically connected to one or more components of system 300. For example, drum encoder 350 may be physically attached to drum 320. As another example, drum encoder 350 may be physically and/or logically connected to image capturing module 140. As still another example, drum encoder 350 may be physically (e.g., via a wired connection) and/or logically (e.g., via network 160) connected to computer 150.

In operation, a user (e.g., an operator) installs image capturing module 140 (or portions thereof such as camera 210 of FIG. 2) on fixture 310 and connects one or more components of image capturing module 140 (e.g., camera 210 of FIG. 2) to computer 150 (e.g., a computer). Computer 150 includes image capturing software. The user turns (e.g., switches) on the power of image capturing module 140. The user unlocks the focus locking mechanism of image capturing module 140 and focuses a camera of image capturing module 140 on target 322 under constant lighting conditions. A successful focus is achieved when maximum contrast is obtained between two pixels identifying the boundary of the light and dark portion of calibration pattern 324 (e.g., a checkerboard pattern) of target 322. The user then locks the focusing mechanism of image capturing module 140. From an image displayed on computer 150, the user observes a black or white region on target 322 in the middle of a field of view 380 of the camera of image capturing module 140. Field of view 380 may represent an angle through which the camera of image capturing module 140 picks up electromagnetic radiation. Field of view 380 may be limited by the area of the image displayed on computer 150. The operator of computer 150 counts the number of light or dark pixels in direction X for a lateral pitch distance of target 322. In the illustrated embodiment of FIG. 3, direction X is parallel to axis 360. A lateral object pixel size (OPS) is calculated by dividing the lateral pitch distance of target 322 by the number of pixels in the lateral pitch distance. For example, if the lateral pitch distance of target 322 equals one inch and the number of pixels for the one-inch pitch distance of target 322 is 52, the OPS equals one inch divided by 52, which equals 0.01923 inches per pixel. OPS indicates the true physical dimension represented by one pixel at the prescribed working distance (e.g., the distance between the camera of image capturing module 140 and target 322).

Measuring and calibrating the OPS ensures that the objects depicted in images captured by image capturing module 140 are properly proportioned and that no data is lost between pixels when image capturing module 140 is in field operation. In certain embodiments, the pixels are square or approximately square (e.g., having an equal length and width within a two percent tolerance). An allowance may be permitted due to the limitations of the camera of image capturing module 140 and/or drum encoder 350.

An encoder rate for drum encoder 350 is determined based on the OPS. The drum encoder rate is the number of electrical pulses generated by drum encoder 350 in one revolution of the shaft of drum encoder 350. The drum encoder rate is equal to the circumference of drum 320 divided by the lateral OPS. For example, if the drum circumference is 32.9867 inches for a 10.5 inch diameter drum and the lateral OPS is 0.01923 inches, the drum encoder rate is 32.9867 inches per revolution divided by 0.01923 inches, which equals 1715.31 pulses (pixels) per revolution.

In certain embodiments, the drum encoder rate is programmed into drum encoder 350 as an integer value. For example, drum encoder 350 may be programmed to 1715 or 1716 pulses per revolution. The user may set motor controller 340 to rotate drum 320 at a low speed. The low speed may be within a range of five to twenty mph (e.g., 10 mph). Image capturing module 140 collects images while drum 320 is rotating at the low speed and communicates the collected images to computer 150. The operator of computer 150 determines (e.g., counts) the number of light or dark pixels in direction Y in one longitudinal pitch distance on target 322. In the illustrated embodiment of FIG. 3, direction Y is perpendicular to axis 360.

The user then sets motor controller 340 to rotate drum 320 at a high speed. The high speed may be within a range of fifty to eighty miles per hour (mph) (e.g., 65 mph). The high speed may represent the maximum speed of vehicle 110 of FIG. 1. Image capturing module 140 collects images while drum 320 is rotating at the high speed and communicates the collected images to computer 150. The operator of computer 150 determines (e.g., counts) the number of light or dark pixels in one pitch distance on target 322 in longitudinal direction Y. The high and low speed longitudinal pixel counts are compared to the lateral pixel counts to determine if the camera pixels are representing physical space equally in the lateral and longitudinal directions. If the longitudinal pixel counts are different than the lateral pixel counts, a different drum encoder rate may be programmed into drum encoder 350, and the above process may be repeated to compare the effects of the new drum encoder rate on the pixel counts in the lateral and longitudinal directions.

The drum encoder rate that generates the closest square pixel is then recorded and assigned to image capturing module 140. If the wheel diameter of vehicle 110 of FIG. 1 is known, the vehicle encoder rate for vehicle 110 can then be calculated. The vehicle encoder rate is the number of electrical pulses generated by vehicle encoder 120 in one revolution of the shaft of vehicle encoder 120. The vehicle encoder rate is equal to the wheel circumference of vehicle 110 of FIG. 1 divided by the drum circumference of drum 320 multiplied by the drum encoder rate. For example, if the wheel circumference of vehicle 110 is 113.097 inches, the drum circumference of drum 320 is 32.9867 inches, and the drum encoder rate is 32.9867 inches per revolution, the vehicle encoder rate is 133.097 inches divided by 32.9867 inches times 1715 pulses per revolution, which equals 5881 pulses per revolution. A user may program the vehicle encoder rate into vehicle encoder 120 of system 100 of FIG. 1, which may reduce the time and/or resources required to field calibrate image capturing module 140.

Although FIG. 3 illustrates a particular arrangement of image capturing module 140, computer 150, network 160, fixture 310, drum 320, motor 330, motor controller 340, and drum encoder 350, this disclosure contemplates any suitable arrangement of image capturing module 140, computer 150, network 160, fixture 310, drum 320, motor 330, motor controller 340, and drum encoder 350. For example, motor 330 and motor controller 340 may be a single component. Image capturing module 140, computer 150, fixture 310, drum 320, motor 330, motor controller 340, and drum encoder 350 may be physically or logically co-located with each other in whole or in part.

Although FIG. 3 illustrates a particular number of image capturing modules 140, computers 150, networks 160, fixtures 310, drums 320, motors 330, motor controllers 340, and drum encoders 350, this disclosure contemplates any suitable number of image capturing modules 140, computers 150, networks 160, fixtures 310, drums 320, motors 330, motor controllers 340, and drum encoders 350. For example, system 300 may include first computer 150 communicatively coupled to image capturing module 140 and a second computer 150 communicatively coupled to drum encoder 350. One or more components of system 100 may be implemented using one or more components of the computer system of FIG. 6.

FIG. 4 illustrates an example method 400 for field calibrating an image capturing module. Method 400 begins at step 405. At step 410, a camera of an image capturing module (e.g., camera 210 of image capturing module 140 of FIG. 2) captures a first image of a target (e.g., target 170 of FIG. 1). The image capturing module may be secured to a vehicle (e.g., vehicle 110 of FIG. 1) and the target may be secured to a roadway (e.g., roadway 112 of FIG. 1). The target is perpendicular to the axis of the camera of the image capturing module. Method 400 then moves from step 410 to step 415. The image captured by the camera of the image capturing module may be displayed on a computer (e.g., computer 150 of FIG. 1) communicatively coupled to the image capturing module.

At step 415 of method 400, an operator determines a number of lateral pixels in a lateral pitch distance of the image of the target. For example, the operator may observe the current focus of the camera under constant lighting conditions. If the contrast between two pixels identifying the boundary of light and dark portions of the focus target is less than observed in bench testing, the operator may unlock the focus mechanism and adjust the focus until a satisfactory result is obtained. The focus mechanism is then locked. The operator may then count the number of light or dark pixels in a lateral pitch distance of the target at the center of the camera's field of view. Method 400 then moves from step 415 to step 420.

At step 420 of method 400, a lateral OPS is determined using the determined number of lateral pixels. For example, the operator may calculate the lateral OPS by dividing the pitch (e.g., one inch) of target 322 by the number of lateral pixels in the pitch region. Method 400 then moves from step 420 to step 425, where a vehicle encoder rate is determined based on the lateral OPS. programmed into an encoder (e.g., vehicle encoder 120 of FIG. 1) of a vehicle (e.g., vehicle 110 of FIG. 1). The vehicle encoder rate is equal to the wheel circumference of vehicle 110 of FIG. 1 divided by the lateral OPS. The vehicle encoder has been set to an initial vehicle encoder rate, which was either determined during a bench calibration procedure or determined arbitrarily. If the calculated vehicle encoder rate is different than the initial vehicle encoder rate previously programmed into the vehicle encoder, then the calculated encoder rate is programmed into the vehicle encoder. Method 400 then moves from step 425 to step 430.

At step 430, the camera of the image capturing module captures a second image of the target while the vehicle is moved forward or backward over the target. For example, a train operator may move one or more portions of the train (e.g., a locomotive) along the railroad track such that the image capturing module attached to the train passes over a target secured to the railroad track. Method 400 then moves from step 430 to step 435.

At step 435 of method 400, the operator determines a number of longitudinal pixels in one longitudinal pitch distance of the second image of the target. Method 400 then moves from step 440 to step 445, where the operator determines whether the number of lateral pixels in the first image match the number of longitudinal pixels in the second image. If the number of lateral pixels in the first image match the number of longitudinal pixels in the second image, method 400 moves from step 440 to step 445, where an operator determines, based on the comparison, that the image capturing module is calibrated.

If, at step 440, the operator determines that the number of lateral pixels in the first image is different than the number of longitudinal pixels in the second image, method 400 moves from step 440 back to step 425, where an operator adjusts the vehicle encoder rate to account for the discrepancy and programs the new vehicle encoder rate into the vehicle encoder. Steps 425 through 440 are repeated until the number of lateral pixels in the first image matches the number of longitudinal pixels in the third image (or the fourth image and so on as required). When the number of lateral and longitudinal pixels match, method 400 moves from step 440 to step 445, where the operator determines, based on the comparison, that the image capturing module is calibrated. Method 400 then moves from step 445 to step 450, where method 400 ends.

Modifications, additions, or omissions may be made to method 400 depicted in FIG. 4. Method 400 includes programming the initial vehicle encoder rate into the vehicle encoder. The method 400 may include activating the camera of the image capturing module. Steps may be performed in parallel or in any suitable order. While discussed as specific components completing the steps of method 400, any suitable component may perform any step of method 400.

FIG. 5 illustrates an example method 500 for bench calibrating an image capturing module. Method 500 begins at step 505. At step 510, a camera of an image capturing module (e.g., camera 210 of image capturing module 140 of FIG. 2), a drum (e.g., drum 320 of FIG. 3), and a motor (e.g., motor 330 of FIG. 3) are attached to a fixture (e.g., fixture 310 of FIG. 3). Method 500 then moves from step 510 to step 515, where a target (e.g., target 322 of FIG. 3) is fastened to the drum. The target is located coaxially and in synchronization with a drum encoder (e.g., drum encoder 350 of FIG. 3). The image capturing module is installed in the fixture with a fixed working distance between the camera and the target. This working distance is a nominal working distance and may vary slightly between different vehicles that utilize image capturing module 140. Method 500 then moves from step 515 to step 520.

At step 520, the camera captures a first image of the target. The camera may be connected to a computer (e.g., computer 150 of FIG. 3) that includes image capturing software. The first image may be an image in the middle of the camera's field of view that is observed by an operator by using the computer. Method 500 then moves from step 520 to step 525, where a number of lateral pixels in a lateral pitch distance of the image of the target is determined. For example, an operator may count, using the first image displayed on the computer, the number of light or dark pixels in a lateral pitch distance of the target at the center of the camera's field of view. Method 400 then moves from step 525 to step 530.

At step 530 of method 500, a lateral OPS is determined using the determined number of lateral pixels. The lateral OPS is calculated by dividing the pitch (e.g., one inch) of target 322 by the number of lateral pixels in the pitch region. Method 500 then moves from step 530 to step 535, where a drum encoder rate is programmed into a drum encoder (e.g., drum encoder 350 of FIG. 3) of the drum. The drum encoder rate is equal to the circumference of drum 320 divided by the lateral OPS. Method 500 then moves from step 535 to step 540, where the drum encoder rate is programmed into the drum encoder. In certain embodiments, the drum encoder is programmed with an integer value representing the drum encoder rate. Method 500 then moves from step 540 to step 545.

At step 545 of method 500, the motor controller is set to rotate the drum at a low speed (e.g., 10 mph). Method 500 then moves from step 545 to step 550, where the camera of the image capturing module captures one or more images of the target while the drum is rotated at the low speed. Method 500 then moves from step 550 to step 555, where a number of longitudinal pixels in one longitudinal pitch distance of each image is determined. For example, each image may be displayed on the computer, and an operator may count the number of dark or light pixels in one pitch distance in the longitudinal section of each image. Method 500 then moves from step 555 to step 560.

At step 560, the motor controller is set to rotate the drum at a high speed (e.g., 65 mph). Method 500 then moves from step 560 to step 565, where the camera of the image capturing module captures one or more images of the target while the drum is rotated at the high speed. Method 500 then moves from step 565 to step 570, where a number of longitudinal pixels in one longitudinal pitch distance of each image is captured while the drum is rotating at the high speed is determined. For example, each image may be displayed on the computer, and an operator may count the number of dark or light pixels in one pitch distance in the longitudinal section of each image. Method 500 then moves from step 570 to step 575.

At step 575, the operator determines whether the number of lateral pixels in the first image match the number of longitudinal pixels in the images captured while the drum was rotating at the low and high speeds. If the number of lateral pixels in the first image match the number of longitudinal pixels in the low/high speed images, method 500 moves from step 575 to step 580, where the vehicle encoder rate is calculated using the drum encoder rate. The vehicle encoder rate is equal to the wheel circumference of vehicle 110 of FIG. 1 divided by the drum circumference of drum 320 of FIG. 3 and then multiplied by the drum encoder rate. Method 500 then moves from step 580 to step 585, where method 500 ends.

If, at step 575, the number of lateral pixels in the first image is different than the number of longitudinal pixels in the low/high speed images, method 500 moves from step 575 back to step 540, where the drum encoder rate is adjusted to account for the discrepancy. The adjusted drum encoder rate is programmed into the drum encoder. Steps 540 through 575 are repeated until the number of lateral pixels in the first image matches the number of longitudinal pixels in the low/high speed images. When the number of lateral and longitudinal pixels match, method 500 moves from step 575 to step 580, where the vehicle encoder rate is calculated using the adjusted drum encoder rate. Method 500 then moves from step 580 to step 585, where method 500 ends.

Modifications, additions, or omissions may be made to method 400 depicted in FIG. 5. Method 500 may include more, fewer, or other steps. For example, method 500 may include activating the camera of the image capturing module. Steps may be performed in parallel or in any suitable order. While discussed as specific components completing the steps of method 500, any suitable component may perform any step of method 500. For example, one or more steps of method 500 may be automated (e.g., performed by computer 150 of FIG. 3).

FIG. 6 shows an example computer system that may be used by the systems and methods described herein. For example, one or more components (e.g., computer 150) of system 100 of FIG. 1 and/or system 300 of FIG. 3 may include one or more interface(s) 610, processing circuitry 620, memory(ies) 630, and/or other suitable element(s). Interface 610 receives input, sends output, processes the input and/or output, and/or performs other suitable operation. Interface 610 may comprise hardware and/or software.

Processing circuitry 620 performs or manages the operations of the component. Processing circuitry 620 may include hardware and/or software. Examples of a processing circuitry include one or more computers, one or more microprocessors, one or more applications, etc. In certain embodiments, processing circuitry 620 executes logic (e.g., instructions) to perform actions (e.g., operations), such as generating output from input. The logic executed by processing circuitry 620 may be encoded in one or more tangible, non-transitory computer readable media (such as memory 630). For example, the logic may comprise a computer program, software, computer executable instructions, and/or instructions capable of being executed by a computer. In particular embodiments, the operations of the embodiments may be performed by one or more computer readable media storing, embodied with, and/or encoded with a computer program and/or having a stored and/or an encoded computer program.

Memory 630 (or memory unit) stores information. Memory 630 may comprise one or more non-transitory, tangible, computer-readable, and/or computer-executable storage media. Examples of memory 630 include computer memory (for example, RAM or ROM), mass storage media (for example, a hard disk), removable storage media (for example, a Compact Disk (CD) or a Digital Video Disk (DVD)), database and/or network storage (for example, a server), and/or other computer-readable medium.

Embodiments of the present disclosure are directed to systems and methods for capturing, by a camera of an image capturing module, a first image of a target. The image capturing module and a drum are attached to a fixture and the target is attached to the drum. The method also includes determining a number of lateral pixels in a lateral pitch distance of the image of the target, determining a lateral object pixel size based on the number of lateral pixels, and determining a drum encoder rate based on the lateral object pixel size. The drum encoder rate is programmed into a drum encoder attached to the drum. The method further includes capturing, by the camera of the image capturing module, a second image of the target while the target is rotated about an axis of the drum, determining a number of longitudinal pixels in one longitudinal pitch distance of the second image, and comparing the number of lateral pixels to the number of longitudinal pixels.

Herein, a computer-readable non-transitory storage medium or media may include one or more semiconductor-based or other integrated circuits (ICs) (such as field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

## Claims

1. A system (100, 300) for field calibration of an image capture module (140), comprising:
a vehicle (110) having a beam (130) for orienting components of the system (100, 300) for field calibration while the vehicle (110) is in motion; and
an image capture module (140) operably coupled to the beam (130), comprising:
a camera (210) configured to capture images of a target (170) disposed proximate to railroad tracks; and
a memory (630) configured to store the captured images of the target (170);
wherein the image capture module (140) is configured to perform the field calibration of the image capture module (140) by:
capturing, via the camera (210), a first image of the target (170);
determining a number of lateral pixels in a lateral pitch distance of the first
image of the target (170, 322) in a lateral direction (X) perpendicular to the railroad tracks;
initializing a vehicle encoder (120) operably coupled to the vehicle (110) with a vehicle encoder rate, the vehicle encoder (120) being configured to communicate with the camera (210) of the image capturing module (140) via a controller to ensure that the camera (210) captures images of the same perspective and proportion regardless of the speed of travel of the vehicle (110);
adjusting a contrast between two pixels identifying the boundary of light and dark portions of the target (170);
determining a number of longitudinal pixels in a longitudinal pitch distance of the target (322) in a longitudinal direction (Y) parallel to the railroad tracks;
comparing the number of lateral pixels to the number of longitudinal pixels; and
adjusting the vehicle encoder rate until the number of lateral pixels matches the number of longitudinal pixels.

2. The system (100, 300) of Claim 1, wherein the target (170) includes a calibration pattern (324).

3. The system (100, 300) of Claim 2, wherein the calibration pattern (324) has a pitch between 0.375 inch and 2.0 inches.

4. The system (100, 300) of Claim 2 or 3, wherein the calibration pattern (324) includes units with an unequal length-to-width ratio.

5. The system (100, 300) of any one of the preceding Claims, wherein the vehicle encoder rate is a number of electrical pulses generated by the vehicle encoder (120) in one revolution of a shaft of the vehicle encoder (120).

6. The system (100, 300) of any one of the preceding Claims, wherein the contrast is adjusted by unlocking the focus.

7. The system (100, 300) of any one of the preceding Claims, wherein the vehicle encoder (120) is a timing device used to measure axle rotation.

8. The system (100, 300) of any one of the preceding Claims 1-6, wherein the vehicle encoder (120) is a rotary encoder.

9. A method (400) for field calibration of an image capture module (140), comprising:
capturing, via an image capture module (140) operably coupled to a beam (130) of a vehicle (110), a first image of a target (170) disposed proximate to railroad tracks;
determining a number of lateral pixels in a lateral pitch distance of the first image of the target (170, 322) in a lateral direction (X) perpendicular to the railroad tracks;
initializing a vehicle encoder (120) operably coupled to the vehicle (110) with a vehicle encoder rate, the vehicle encoder (120) being configured to communicate with a camera (210) of the image capturing module (140) via a controller to ensure that the camera (210) captures images of the same perspective and proportion regardless of the speed of travel of the vehicle (110);
capturing, via the image capture module (140), a second image of the target (170) while the vehicle (110) is moved over the target (170);
receiving image adjustments adjusting a contrast between two pixels to identify the boundary of light and dark portions of the target (170);
determining a number of longitudinal pixels in a longitudinal pitch distance of the second image of the target (322) in a longitudinal direction (Y) parallel to the railroad tracks;
comparing the number of lateral pixels to the number of longitudinal pixels; and
adjusting the vehicle encoder rate until the number of lateral pixels matches the number of longitudinal pixels.

10. The method (400) of Claim 9, wherein the target (170) includes a calibration pattern (324);
wherein the calibration pattern (324) has a pitch between 0.375 inch and 2.0 inches; and/or
wherein the calibration pattern (324) includes units with an unequal length-to-width ratio.

11. The method (400) of Claim 9 or 10, wherein the vehicle encoder rate is a number of electrical pulses generated by the vehicle encoder (120) in one revolution of a shaft of the vehicle encoder (120); and/or wherein the contrast is adjusted by unlocking the focus.

12. The method (400) of any one of Claims 9-11, wherein image capture module includes a camera (210) configured to capture the images, wherein image capture optionally includes a plurality of cameras (210) configured to capture the images of the target (170) from different angles.

13. A system (100, 300) for calibrating an image capturing module (140) including a camera (210), comprising:
a processor configured to calibrate the image capturing module (140) by performing the steps (425, 540) of:
capturing, by the camera (210), a first image of a target (170) attached to a drum (320) adapted to rotate about an axis (360)
determining a number of lateral pixels in a lateral pitch distance of the first image of the target (170, 322) in a lateral direction (X) parallel to the axis (360);
determining a lateral object pixel size based on the number of lateral pixels;
determining a drum encoder rate based on the lateral object pixel size, wherein the drum encoder rate is programmed into a drum encoder (320, 350) attached to the drum (320); and
determining a number of longitudinal pixels in a longitudinal pitch distance on the target (322) in a longitudinal direction (Y) perpendicular to the axis (360);
comparing the number of lateral pixels and the number of longitudinal pixels to determine if the camera pixels are representing physical space equally in the lateral and longitudinal directions;
programming a different drum encoder rate if the number of longitudinal pixels is different than the number of lateral pixels;
calculating a vehicle encoder rate based on a circumference of a wheel of a vehicle (110), a circumference of the drum (320), and the drum encoder rate.

14. The system (100, 300) of Claim 13, further comprising capturing, by the camera (210) of the image capturing module (140), a second image of the target (170, 322) while the target (170, 322) is rotated about an axis (360) of the drum (320);
optionally further comprising determining a number of longitudinal pixels in a longitudinal pitch distance of the second image;.

15. The system (100, 300) of Claim 14, further comprising determining, in response to comparing the number of lateral pixels to the number of longitudinal pixels, that the number of lateral pixels matches the number of longitudinal pixels;
optionally further comprising programming the vehicle encoder rate into a vehicle encoder (120) attached to a wheel of the vehicle (110).
more optionally further comprising:
capturing, by the camera (210) of the image capturing module (140), a third image of the target (170, 322) while the target (170, 322) is rotated about an axis (360) of the drum (320); determining a number of longitudinal pixels in a longitudinal pitch distance of the third image; and
comparing the number of lateral pixels to the number of longitudinal pixels in the longitudinal pitch distance of the third image.

## Patentansprüche

1. System (100, 300) zur Feldkalibrierung eines Bilderfassungsmoduls (140), umfassend:
ein Fahrzeug (110) mit einem Träger (130) zum Ausrichten von Komponenten des Systems (100, 300) zur Feldkalibrierung, während das Fahrzeug (110) in Bewegung ist; und
ein Bilderfassungsmodul (140), das betriebsfähig mit dem Träger (130) gekoppelt ist, umfassend:
eine Kamera (210), die eingerichtet ist, Bilder eines Ziels (170) zu erfassen, das in der Nähe von Eisenbahngleisen angeordnet ist; und
einen Speicher (630), der eingerichtet ist, die erfassten Bilder des Ziels (170) zu speichern;
wobei das Bilderfassungsmodul (140) eingerichtet ist, die Feldkalibrierung des Bilderfassungsmoduls (140) durchzuführen durch:
Erfassen eines ersten Bildes des Ziels (170) über die Kamera (210);
Bestimmen einer Anzahl von lateralen Pixeln in einem lateralen Pitchabstand des ersten Bildes des Ziels (170, 322) in einer lateralen Richtung (X) senkrecht zu den Eisenbahngleisen;
Initialisieren eines Fahrzeugcodierers (120), der betriebsfähig mit dem Fahrzeug (110) gekoppelt ist, mit einer Fahrzeugcodiererrate, wobei der Fahrzeugcodierer (120) eingerichtet ist, mit der Kamera (210) des Bilderfassungsmoduls (140) über eine Steuerung zu kommunizieren, um sicherzustellen, dass die Kamera (210) Bilder der gleichen Perspektive und Proportion unabhängig von der Fahrgeschwindigkeit des Fahrzeugs (110) erfasst;
Anpassen eines Kontrasts zwischen zwei Pixeln, die die Grenze von hellen und dunklen Abschnitten des Ziels (170) identifizieren;
Bestimmen einer Anzahl von longitudinalen Pixeln in einem longitudinalen Pitchabstand des Ziels (322) in einer longitudinalen Richtung (Y) parallel zu den Eisenbahngleisen;
Vergleichen der Anzahl von lateralen Pixeln mit der Anzahl von longitudinalen Pixeln; und
Anpassen der Fahrzeugcodiererrate, bis die Anzahl von lateralen Pixeln mit der Anzahl von longitudinalen Pixeln übereinstimmt.

2. System (100, 300) nach Anspruch 1, wobei das Ziel (170) ein Kalibrierungsmuster (324) enthält.

3. System (100, 300) nach Anspruch 2, wobei das Kalibrierungsmuster (324) einen Pitch zwischen 0,375 Zoll und 2,0 Zoll aufweist.

4. System (100, 300) nach Anspruch 2 oder 3, wobei das Kalibrierungsmuster (324) Einheiten mit einem ungleichen Länge-zu-Breite-Verhältnis enthält.

5. System (100, 300) nach einem der vorhergehenden Ansprüche, wobei die Fahrzeugcodiererrate eine Anzahl von elektrischen Impulsen ist, die von dem Fahrzeugcodierer (120) in einer Umdrehung eines Schafts des Fahrzeugcodierers (120) erzeugt werden.

6. System (100, 300) nach einem der vorhergehenden Ansprüche, wobei der Kontrast durch Entriegeln des Fokus angepasst wird.

7. System (100, 300) nach einem der vorhergehenden Ansprüche, wobei der Fahrzeugcodierer (120) eine Zeitmessvorrichtung ist, die zum Messen von Achsdrehung verwendet wird.

8. System (100, 300) nach einem der vorhergehenden Ansprüche 1-6, wobei der Fahrzeugcodierer (120) ein Drehcodierer ist.

9. Verfahren (400) zur Feldkalibrierung eines Bilderfassungsmoduls (140), umfassend:
Erfassen, über ein Bilderfassungsmodul (140), das betriebsfähig mit einem Träger (130) eines Fahrzeugs (110) gekoppelt ist, eines ersten Bildes eines Ziels (170), das in der Nähe von Eisenbahngleisen angeordnet ist;
Bestimmen einer Anzahl von lateralen Pixeln in einem lateralen Pitchabstand des ersten Bildes des Ziels (170, 322) in einer lateralen Richtung (X) senkrecht zu den Eisenbahngleisen;
Initialisieren eines Fahrzeugcodierers (120), der betriebsfähig mit dem Fahrzeug (110) gekoppelt ist, mit einer Fahrzeugcodiererrate, wobei der Fahrzeugcodierer (120) eingerichtet ist, mit einer Kamera (210) des Bilderfassungsmoduls (140) über eine Steuerung zu kommunizieren, um sicherzustellen, dass die Kamera (210) Bilder der gleichen Perspektive und Proportion unabhängig von der Fahrgeschwindigkeit des Fahrzeugs (110) erfasst;
Erfassen eines zweiten Bildes des Ziels (170) über das Bilderfassungsmodul (140), während das Fahrzeug (110) über das Ziel (170) bewegt wird;
Empfangen von Bildanpassungen, die einen Kontrast zwischen zwei Pixeln anpassen, um die Grenze von hellen und dunklen Abschnitten des Ziels (170) zu identifizieren;
Bestimmen einer Anzahl von longitudinalen Pixeln in einem longitudinalen Pitchabstand des zweiten Bildes des Ziels (322) in einer longitudinalen Richtung (Y) parallel zu den Eisenbahngleisen;
Vergleichen der Anzahl von lateralen Pixeln mit der Anzahl von longitudinalen Pixeln; und
Anpassen der Fahrzeugcodiererrate, bis die Anzahl von lateralen Pixeln mit der Anzahl von longitudinalen Pixeln übereinstimmt.

10. Verfahren (400) nach Anspruch 9, wobei das Ziel (170) ein Kalibrierungsmuster (324) enthält;
wobei das Kalibrierungsmuster (324) einen Pitch zwischen 0,375 Zoll und 2,0 Zoll aufweist; und/oder
wobei das Kalibrierungsmuster (324) Einheiten mit einem ungleichen Länge-zu-Breite-Verhältnis enthält.

11. Verfahren (400) nach Anspruch 9 oder 10, wobei die Fahrzeugcodiererrate eine Anzahl von elektrischen Impulsen ist, die von dem Fahrzeugcodierer (120) in einer Umdrehung eines Schafts des Fahrzeugcodierers (120) erzeugt werden; und/oder
wobei der Kontrast durch Entriegeln des Fokus angepasst wird.

12. Verfahren (400) nach einem der Ansprüche 9-11, wobei das Bilderfassungsmodul eine Kamera (210) enthält, die eingerichtet ist, die Bilder zu erfassen, wobei die Bilderfassung optional eine Vielzahl von Kameras (210) enthält, die eingerichtet sind, die Bilder des Ziels (170) aus verschiedenen Winkeln zu erfassen.

13. System (100, 300) zum Kalibrieren eines Bilderfassungsmoduls (140), das eine Kamera (210) enthält, umfassend:
einen Prozessor, der eingerichtet ist, das Bilderfassungsmodul (140) zu kalibrieren, indem er die folgenden Schritte (425, 540) durchführt:
Erfassen eines ersten Bildes eines Ziels (170), das an einer Trommel (320) angebracht ist, die eingerichtet ist, sich um eine Achse (360) zu drehen, durch die Kamera (210);
Bestimmen einer Anzahl von lateralen Pixeln in einem lateralen Pitchabstand des ersten Bildes des Ziels (170, 322) in einer lateralen Richtung (X) parallel zu der Achse (360);
Bestimmen einer lateralen Objektpixelgröße basierend auf der Anzahl von lateralen Pixeln;
Bestimmen einer Trommelcodiererrate basierend auf der lateralen Objektpixelgröße, wobei die Trommelcodiererrate in einen Trommelcodierer (320, 350) programmiert ist, der an der Trommel (320) angebracht ist; und
Bestimmen einer Anzahl von longitudinalen Pixeln in einem longitudinalen Pitchabstand auf dem Ziel (322) in der longitudinalen Richtung (Y) senkrecht zu der Achse (360);
Vergleichen der Anzahl von lateralen Pixeln und der Anzahl von longitudinalen Pixeln, um zu bestimmen, ob die Kamerapixel den physikalischen Raum gleichmäßig in der lateralen und longitudinalen Richtung darstellen;
Programmieren einer anderen Trommelcodiererrate, wenn sich die Anzahl von longitudinalen Pixeln von der Anzahl von lateralen Pixeln unterscheidet;
Berechnen einer Fahrzeugcodiererrate basierend auf einem Umfang eines Rads eines Fahrzeugs (110), einem Umfang der Trommel (320) und der Trommelcodiererrate.

14. System (100, 300) nach Anspruch 13, ferner umfassend
Erfassen eines zweiten Bildes des Ziels (170, 322) durch die Kamera (210) des Bilderfassungsmoduls (140), während das Ziel (170, 322) um eine Achse (360) der Trommel (320) gedreht wird;
optional ferner umfassend Bestimmen einer Anzahl von longitudinalen Pixeln in einem longitudinalen Pitchabstand des zweiten Bildes.

15. System (100, 300) nach Anspruch 14, ferner umfassend Bestimmen, als Reaktion auf das Vergleichen der Anzahl von lateralen Pixeln mit der Anzahl von longitudinalen Pixeln, dass die Anzahl von lateralen Pixeln mit der Anzahl von longitudinalen Pixeln übereinstimmt;
optional ferner umfassend Programmieren der Fahrzeugcodiererrate in einen Fahrzeugcodierer (120), der an einem Rad des Fahrzeugs (110) angebracht ist.
weiter optional ferner umfassend:
Erfassen eines dritten Bildes des Ziels (170, 322) durch die Kamera (210) des Bilderfassungsmoduls (140), während das Ziel (170, 322) um eine Achse (360) der Trommel (320) gedreht wird; Bestimmen einer Anzahl von longitudinalen Pixeln in einem longitudinalen Pitchabstand des dritten Bildes; und
Vergleichen der Anzahl von lateralen Pixeln mit der Anzahl von longitudinalen Pixeln in dem longitudinalen Pitchabstand des dritten Bildes.

## Revendications

1. Système (100, 300) pour l'étalonnage sur site d'un module de capture d'images (140), comprenant :
un véhicule (110) ayant une poutre (130) pour l'orientation des composants du système (100, 300) pour l'étalonnage sur site pendant que le véhicule (110) est en mouvement ; et
un module de capture d'images (140) couplé de manière fonctionnelle à la poutre (130), comprenant :
une caméra (210) configurée pour capturer des images d'une cible (170) disposée à proximité de voies ferrées ; et
une mémoire (630) configurée pour stocker les images capturées de la cible (170) ; dans laquelle le module de capture d'images (140) est configuré pour effectuer l'étalonnage sur site du module de capture d'images (140) en :
capturant, via la caméra (210), une première image de la cible (170) ;
déterminant un nombre de pixels latéraux dans un pas latéral de la première image de la cible (170, 322) dans une direction latérale (X) perpendiculaire aux voies ferrées ;
initialisant un encodeur de véhicule (120) couplé de manière fonctionnelle au véhicule (110) avec une cadence de l'encodeur de véhicule, l'encodeur de véhicule (120) étant configuré pour communiquer avec la caméra (210) du module de capture d'images (140) via un contrôleur afin de garantir que la caméra (210) capture des images de la même perspective et proportion indépendamment de la vitesse de déplacement du véhicule (110) ;
effectuant un ajustement d'un contraste entre deux pixels identifiant la frontière entre la partie claire et la partie sombre de la cible (170) ;
déterminant un nombre de pixels longitudinaux dans un pas longitudinal de la cible (322) dans une direction longitudinale (Y) parallèle aux voies ferrées ;
effectuant une comparaison du nombre de pixels latéraux avec le nombre de pixels longitudinaux ;
et
ajustant la cadence de l'encodeur de véhicule jusqu'à ce que le nombre de pixels latéraux fasse correspondre le nombre de pixels longitudinaux.

2. Système (100, 300) selon la revendication 1, dans lequel la cible (170) comprend un motif d'étalonnage (324).

3. Système (100, 300) selon la revendication 2, dans lequel le motif d'étalonnage (324) a un pas de 0,375 pouce à 2,0 pouces.

4. Système (100, 300) selon la revendication 2 ou 3, dans lequel le motif d'étalonnage (324) comprend des unités ayant un rapport longueur/largeur inégal.

5. Système (100, 300) selon l'une quelconque des revendications précédentes, dans lequel la cadence de l'encodeur de véhicule est un nombre d'impulsions électriques générées par l'encodeur de véhicule (120) lors d'une révolution d'un arbre de l'encodeur de véhicule (120).

6. Système (100, 300) selon l'une quelconque des revendications précédentes, dans lequel le contraste est ajusté par le déverrouillage de la mise au point.

7. Système (100, 300) selon l'une quelconque des revendications précédentes, dans lequel l'encodeur de véhicule (120) est un dispositif de chronométrage utilisé pour mesurer la rotation d'essieu.

8. Système (100, 300) selon l'une quelconque des revendications 1 à 6, dans lequel l'encodeur de véhicule (120) est un encodeur rotatif.

9. Procédé (400) pour l'étalonnage sur site d'un module de capture d'images (140), comprenant :
capturer, via un module de capture d'images (140) couplé de manière fonctionnelle à une poutre (130) d'un véhicule (110), une première image d'une cible (170) disposée à proximité de voies ferrées ;
déterminer un nombre de pixels latéraux dans un pas latéral de la première image de la cible (170, 322) dans une direction latérale (X) perpendiculaire aux voies ferrées ;
initialiser un encodeur de véhicule (120) couplé de manière fonctionnelle au véhicule (110) avec une cadence de l'encodeur de véhicule, l'encodeur de véhicule (120) étant configuré pour communiquer avec une caméra (210) du module de capture d'images (140) via un contrôleur afin de garantir que la caméra (210) capture des images de la même perspective et proportion indépendamment de la vitesse de déplacement du véhicule (110) ;
capturer, via le module de capture d'images (140), une seconde image de la cible (170) pendant que le véhicule (110) est déplacé au-dessus de la cible (170) ;
recevoir des ajustements d'image effectuant un ajustement d'un contraste entre deux pixels pour identifier la frontière entre la partie claire et la partie sombre de la cible (170) ;
déterminer un nombre de pixels longitudinaux dans un pas longitudinal de la seconde image de la cible (322) dans une direction longitudinale (Y) parallèle aux voies ferrées ;
effectuer une comparaison du nombre de pixels latéraux avec le nombre de pixels longitudinaux ; et
ajuster la cadence de l'encodeur de véhicule jusqu'à ce que le nombre de pixels latéraux fasse correspondre le nombre de pixels longitudinaux.

10. Procédé (400) selon la revendication 9, dans lequel la cible (170) comprend un motif d'étalonnage (324) ;
dans lequel le motif d'étalonnage (324) a un pas de 0,375 pouce à 2,0 pouces ; et/ou
dans lequel le motif d'étalonnage (324) comprend des unités ayant un rapport longueur/largeur inégal.

11. Procédé (400) selon la revendication 9 ou 10, dans lequel la cadence de l'encodeur de véhicule est un nombre d'impulsions électriques générées par l'encodeur de véhicule (120) lors d'une révolution d'un arbre de l'encodeur de véhicule (120) ; et/ou
dans lequel le contraste est ajusté par le déverrouillage de la mise au point.

12. Procédé (400) selon l'une quelconque des revendications 9 à 11, dans lequel le module de capture d'images comprend une caméra (210) configurée pour capturer les images, dans lequel la capture d'images comprend en option une pluralité de caméras (210) configurées pour capturer les images de la cible (170) sous différents angles.

13. Système (100, 300) pour l'étalonnage d'un module de capture d'images (140) comprenant une caméra (210), comprenant :
un processeur configuré pour étalonner le module de capture d'images (140) en effectuant les étapes (425, 540) de :
capturer, par la caméra (210), une première image d'une cible (170) fixée à un tambour (320) adapté à tourner autour d'un axe (360) ;
déterminer un nombre de pixels latéraux dans un pas latéral de la première image de la cible (170, 322) dans une direction latérale (X) parallèle à l'axe (360) ;
déterminer une taille de pixel d'objet latéral sur la base du nombre de pixels latéraux ;
déterminer une cadence de l'encodeur de tambour sur la base de la taille de pixel d'objet latéral, dans lequel la cadence de l'encodeur de tambour est programmée dans un encodeur de tambour (320, 350) fixé au tambour (320) ; et
déterminer un nombre de pixels longitudinaux dans un pas longitudinal sur la cible (322) dans une direction longitudinale (Y) perpendiculaire à l'axe (360) ;
effectuer une comparaison du nombre de pixels latéraux et du nombre de pixels longitudinaux pour déterminer si les pixels de la caméra représentent l'espace physique de manière égale dans les directions latérale et longitudinale ;
effectuer une programmation d'une cadence de l'encodeur de tambour différente si le nombre de pixels longitudinaux est différent du nombre de pixels latéraux ;
effectuer un calcul d'une cadence de l'encodeur de véhicule sur la base d'une circonférence d'une roue d'un véhicule (110), d'une circonférence du tambour (320), et de la cadence de l'encodeur de tambour.

14. Système (100, 300) selon la revendication 13, comprenant en outre la capture, par la caméra (210) du module de capture d'images (140), d'une seconde image de la cible (170, 322) pendant que la cible (170, 322) est tournée autour d'un axe (360) du tambour (320) ;
comprenant en option en outre la détermination d'un nombre de pixels longitudinaux dans un pas longitudinal de la seconde image ;

15. Système (100, 300) selon la revendication 14, comprenant en outre la détermination, en réponse à la comparaison du nombre de pixels latéraux avec le nombre de pixels longitudinaux, que le nombre de pixels latéraux fait correspondre le nombre de pixels longitudinaux ;
comprenant en option en outre la programmation de la cadence de l'encodeur de véhicule dans un encodeur de véhicule (120) fixé à une roue du véhicule (110).
comprenant en outre, de manière encore plus optionnelle :
capturer, par la caméra (210) du module de capture d'images (140), une troisième image de la cible (170, 322) pendant que la cible (170, 322) est tournée autour d'un axe (360) du tambour (320) ; déterminer un nombre de pixels longitudinaux dans un pas longitudinal de la troisième image ; et
effectuer une comparaison du nombre de pixels latéraux avec le nombre de pixels longitudinaux dans le pas longitudinal de la troisième image.
